(19) Europäisches Patentamt
European Patent Office
Office européen des brevets

(11) **EP 4 226 179 B1**

(12) **EUROPÄISCHE PATENTSCHRIFT**

(45) Veröffentlichungstag und Bekanntmachung des Hinweises auf die Patenterteilung:
**19.02.2025  Patentblatt 2025/08**

(21) Anmeldenummer: **21790428.3**

(22) Anmeldetag: **08.10.2021**

(51) Internationale Patentklassifikation (IPC):
**G01S 7/36** *(2006.01)*   **G01S 13/00** *(2006.01)*
**G01S 13/22** *(2006.01)*   **G01S 13/46** *(2006.01)*
**G01S 13/87** *(2006.01)*   **G01S 7/41** *(2006.01)*

(52) Gemeinsame Patentklassifikation (CPC):
**G01S 7/36; G01S 7/41; G01S 13/003;**
**G01S 13/222; G01S 13/227; G01S 13/46;**
**G01S 13/878;** G01S 2013/468

(86) Internationale Anmeldenummer:
**PCT/EP2021/077909**

(87) Internationale Veröffentlichungsnummer:
**WO 2022/074218 (14.04.2022 Gazette 2022/15)**

(54) **VERFAHREN ZUR DETEKTION EINES MIT FLÄCHENELEMENTEN AUS METAMATERIAL ODER "FREQUENCY SELECTIVE SURFACES"-MATERIALIEN AUSGESTATTETEN FLUGKÖRPERS**

METHOD FOR DETECTING A MISSILE EQUIPPED WITH SURFACE ELEMENTS MADE OF METAMATERIAL OR "FREQUENCY-SELECTIVE SURFACE" MATERIALS

PROCÉDÉ POUR DÉTECTER UN MISSILE ÉQUIPÉ D'ÉLÉMENTS DE SURFACE COMPOSÉS D'UN MÉTAMATÉRIAU OU DE MATÉRIAUX À "SURFACES SÉLECTIVES EN FRÉQUENCE"

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2020  DE 102020126431**

(43) Veröffentlichungstag der Anmeldung:
**16.08.2023  Patentblatt 2023/33**

(73) Patentinhaber: **Rheinmetall Air Defence AG**
**8050 Zürich (CH)**

(72) Erfinder: **FRICK, Henry Roger**
**8442 Hettlingen (CH)**

(74) Vertreter: **Kirschner, Sebastian**
**Hübsch & Kirschner Partnerschaft**
**Patentanwälte mbB**
**Bonner Straße 323**
**50968 Köln (DE)**

(56) Entgegenhaltungen:
DE-B3- 102016 015 107     US-A1- 2015 029 052
US-A1- 2016 178 729       US-B1- 10 725 164

**Beschreibung**

Die Erfindung betrifft ein Verfahren mit den Merkmalen des Patentanspruches 1 und ein Radarsystem mit den Merkmalen des Patentanspruches 14.

Aus der gattungsbildenden US 10 725 164 B1 ist ein Verfahren zur Detektion eines mit Flächenelementen aus Metamaterialien oder "Frequency Selective Surfaces"-Materialien ausgestatteten Flugkörpers bekannt. Mittels zweier Sendeantennen werden Sendepulse mit unterschiedlichen Frequenzen gesendet und es wird überprüft, ob die Sendepulse an dem Flugkörper gestreut werden, wobei im Fall der Rückstreuung mittels einer Steuerung der Flächenelemente Radarpulse mit einem veränderten Signal zurückgestreut werden.

Aus der US 2016/178729 A1 offenbart ein VHF/UHF-Radar, um Stealth-Flugzeuge zu detektieren. Es werden zwei oder drei Radarkeulen mit unterschiedlichen Wellenlängen erzeugt, wobei die Radarkeulen länger als die Länge des Flugzeugs sind. Mit unterschiedlichen Ausrichtungen der Keulen wird eine Winkellage des Flugzeugs bestimmt.

Die US 2015/029052 A1 offenbart ein Quantum-Harmonik Radar, um Stealth-Flugzeuge zu detektieren.

Aus der DE 10 2016 015 107 B3 ist ein Verfahren zum Betreiben eines Radarsystems zur Vermeidung von Täuschungen durch Dritte bekannt, wobei eine Verbindung zwischen mindestens einem Peilempfänger und einem Suchradar bereitgestellt wird. Von einer Sendeantenne, nämlich dem Suchradar werden mehrere Pulse mit unterschiedlichen Codes gesendet und/oder mit unterschiedlichen Signalformen gesendet. Dabei werden den Sendepulsen des Suchradars mit Hilfe einer digitalen Modulationsmethode insbesondere Zufallszahlen aufgeprägt. Die Peilempfänger und/oder das Suchradar empfangen an einem Ziel gestreute Pulse. Es wird danach überprüft, ob diese Empfangspulse an einem Ziel gestreut sind und damit ein Nutzsignal bilden oder durch Täuschsignale gebildet sind. Hierzu werden mittels des mindestens einen Peilempfängers und/oder des Suchradars Empfangsrichtungen der Empfangspulse bestimmt. Es wird überprüft, ob die Empfangsrichtungen einem gemeinsamen Zielgebiet zugeordnet werden können und somit ein Nutzsignal bilden oder keinem gemeinsamen Zielgebiet zugeordnet sind und somit ein Täuschsignal bilden. Es kann somit unterschieden werden, ob ein Täuschsignal oder ein Nutzsignal vorliegt. Die hier beschriebene Funktionsweise basiert auf das Erkennen des eingesetzten Codes im Sendepuls durch die Empfänger im Suchradar und in den Peilern. Im Folgenden wird eine zusätzliche Methode vorgeschlagen, welche dem System in DE 10 2016 015 107 B3 erlaubt auch die Anwesenheit von feindliche Objekten, welche die Signalähnlichkeit zerstören, zu detektieren.

Seit einigen Jahren wird auf dem Gebiet der "Frequency Selective Surfaces (FSS)" und "Metamaterials (MM)" in der Elektrodynamik geforscht und entwickelt. Anwendungsgebiete finden sich im Bereich der Antennen und der Radar-Cross-Section (RCS) Modifikation. Bis heute waren die entsprechenden Vorschläge für FSS und MM eher statisch und passiv. Dies bedeutet, dass die Strukturen für bestimmte Anwendungen designed werden und während dem Betrieb ihre Eigenschaften nicht verändern können. Nun zeigen sich aber Bestrebungen, die Eigenschaften von FSS und MM während der Nutzung zu verändern, bzw. an einer veränderlichen Umgebung anzupassen. In der Fachliteratur sind erste Ansätze im zivilen Bereich erkennbar. Es wird in der Fachliteratur hingewiesen, dass eine Steuerung des Reflexionsverhaltens auch mit einer angelegten Steuerspannung möglich sei und größere Flächen damit abgedeckt werden können. Zudem kann aus der Fachliteratur entnommen werden, dass die Produktionskosten für die Herstellung einer Flächeneinheit nicht so hoch sein werden.

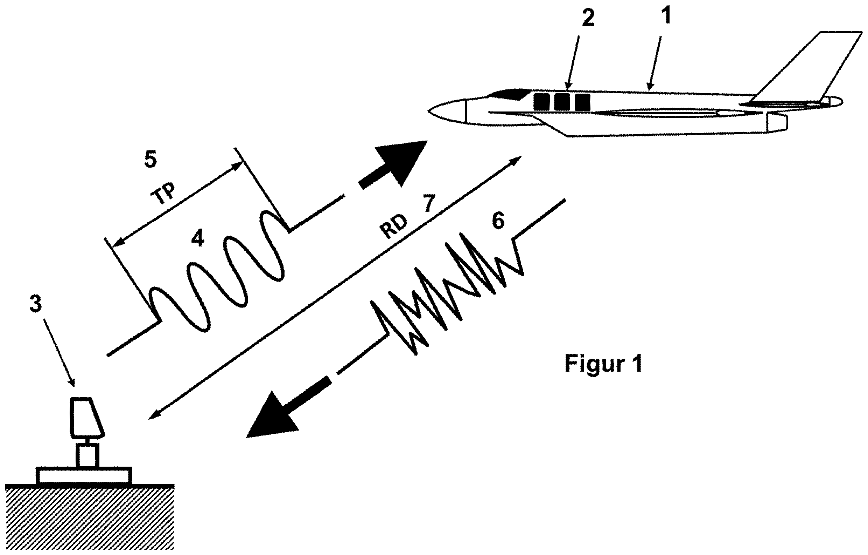

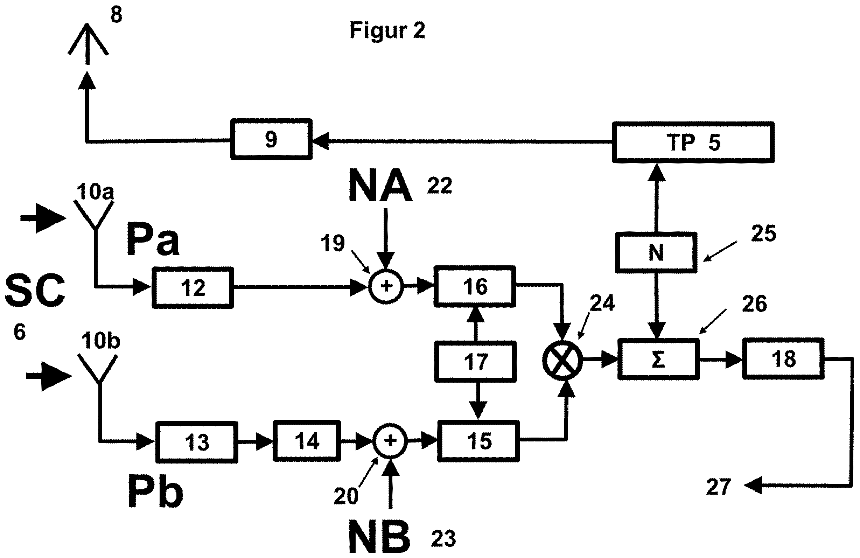

Aus der Fachliteratur lassen sich viele Anwendungsgebiete erkennen, besonders auch im militärischen Gebiet. Hierzu darf die Problemstellung nun anhand von Fig. 1 und Fig. 2 erläutert werden. Fig. 1 zeigt einen Flugkörper 1 mit einem Flächenelement 2 aus Metamaterial, das adaptiv steuerbar ist. Ferner ist ein Suchradar 3 vorhanden, das Sendepulse 4 mit einer Pulsdauer 5, TP, aussendet. Der Sendepuls 4 wird am Flugkörper 1 mit den Flächenelementen 2 gestreut und es entsteht ein am Flugobjekt 1 gestreuter Radarpuls 6 mit einem Signal SC mit einem Signalwert C als Zufallsvariable. Das Signal SC 6 hat einen Erwartungswert $E\{C\} = 0$ oder $E\{C\} \neq 0$ und ist zu den Rauschsignalen NA 22 und NB 23 statistisch unabhängig und unkorreliert, was in der Realität der Normalfall ist. Die Detektionsdistanz RD ist mit dem Bezugszeichen 7 gekennzeichnet.

Wird nun angenommen, dass die Oberfläche von Flugkörpern 1, wie Flugzeuge, Drohnen oder Raketen mit einer Konfiguration aus den oben genannten Flächeneinheiten 2 beschichtet ist und jeder Flächeneinheit 2 mit einer Steuerspannung versorgt wird, so kann die RCS während des Fluges verändert werden. Somit kann gemäß eines Anflugszenarios die relevante RCS vermindert werden, um die Detektionsdistanz RD 7 zu einem Suchradar 3 zur verkleinern. Allgemein werden solche Maßnahmen zur RCS-Reduktion als "Stealth"-Maßnahmen beschrieben. Werden die RCS-Eigenschaften der Flugkörper nicht verändert, so kann von einem passiven "Stealth"-Prinzip gesprochen werden. Werden hingegen die RCS-Eigenschaften adaptiv verändert, so kann dies als aktives "Stealth"-Prinzip bezeichnet werden.

Beim aktiven "Stealth"-Konzept, d.h. das Reflexionsverhalten der einzelnen Flächeneinheiten 2 wird per Steuerspannung verändert, kann neben der RCS-Beeinflussung ein weiterer Effekt zur Detektionsdistanzreduktion erzielt werden. Mittels einer variierenden Steuerspannung kann innerhalb der Radarpulsdauer TP 5 des Sendepulses 4 die Reflexion in Amplitude und Phase verändert werden. Werden nun alle Flächeneinheiten 2 mit rauschähnlichen Steuerspannungen angesteuert, wobei keine Korrelation zwischen den einzelnen Steuerspannungen besteht, erfährt der gestreute Radarpuls 6 des Suchradars 3 eine Modulation in Amplitude und Phase. Im Extremfall verliert der gestreute Radarpuls 6 seine Ähnlichkeit zum Sendepuls 4. Der Suchradar 3 empfängt somit den gestreuten Radarpuls 6 und versucht diesen mit Hilfe von signalangepassten Filtern, sogenannten "Matched Filters" aus dem Geräterauschen zu erkennen. Solange der empfangene Radarpuls 6 eine Ähnlichkeit mit dem erwarteten Empfangspuls hat, kann am Ausgang des "Matched Filters" das Signal-zu-Rauschleistungsverhältnis (SNR) erhöht werden. Dies befähigt den Suchradar 3 auch kleine Signalanteile aus dem Rauschen zu erkennen.

Wird nun der gestreute Radarpulse 6 nun soweit durch die Steuerspannungen moduliert, dass dieser eher einem Rauschsignal ähnelt, werden die Matched Filter wirkungslos. Dies führt dazu, dass das SNR nicht verbessert werden kann und somit die Wahrscheinlichkeit einer Detektion sinkt. Dies resultiert in eine Detektionsdistanzreduktion, welche dem angreifenden Flugkörper 1 einen Vorteil verschafft. Besonders von dieser Art von aktiven "Stealth" sind Suchradarsysteme 3, welche die Pulskompressions-Methode verwenden, betroffen, da diese eine relative lange Pulsdauer TP 5 aufweisen. Dasselbe aktive "Stealth"-Prinzip kann auch bei Verfolgungsradar-Systeme angewendet werden.

Der Erfindung liegt daher die Aufgabe zugrunde, ein Verfahren bereitzustellen, wobei einem Suchradar oder auch Verfolgungsradar zusätzlich zu seinen bisherigen Fähigkeiten befähigt, das von einem Ziel gestreute Signal, welches keine Ähnlichkeit mit dem originalen Sendesignal mehr hat, zu erkennen und den Standort des Streukörpers zu bestimmen.

Diese der Erfindung zugrunde liegende Aufgabe wird nun durch ein Verfahren mit den Merkmalen des Patentanspruches 1 gelöst und ein Radarsystem mit den Merkmalen des Patentanspruches 14.

Das Verfahren dient zur Detektion eines Flugkörpers mit Flächenelementen aus Metamaterialien oder "Frequency Selective Surfaces"-Materialien, wobei mittels einer Sendeantenne ein Sendepuls gesendet wird, wobei überprüft wird, ob der Sendepuls an dem Flugkörper gestreut wird, wobei im Fall der Rückstreuung mittels einer Steuerung der Flächenelemente ein Radarpuls mit einem veränderten Signal zurückgestreut wird, dadurch gekennzeichnet, dass mittels zweier Empfangsantennen zwei Empfangssignale empfangen werden, wobei die Empfangssignale abgetastet und Samples n=1..N der Empfangssignale erzeugt werden, wobei die Empfangssignale A(n)+C(n) bzw. B(n)+C(n) jeweils einen Rauschanteil A(n) bzw. B(n) und im Fall der Rückstreuung jeweils einen zusätzlichen durch die Flächenelemente beeinflussten Signalanteil C(n) aufweisen, wobei die Samples der Empfangssignale zunächst multipliziert werden und die multiplizierten Samples über ein gleitendes Zeitfenster summiert werden und ein Signal

$$S = \sum_{n=1}^{N}[C(n) + A(n)] \cdot [C(n) + B(n)]$$ bestimmt wird, wobei ein Erwartungswert

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

bestimmt wird, wobei der Erwartungswert E{S} mit einem Schwellwert verglichen wird, wobei festgestellt wird, ob ein gemeinsames Signal (SC) in beiden Empfangssignalen vorhanden ist oder nicht.

Das Verfahren dient insbesondere zur Detektion eines Flugkörpers mit Flächenelementen aus Metamaterialien oder "Frequency Selective Surfaces"-Materialien, wobei mittels einer Sendeantenne ein Sendepuls gesendet wird, wobei überprüft wird, ob der Sendepuls an dem Flugkörper gestreut wird, wobei im Fall der Rückstreuung mittels einer Steuerung der Flächenelemente ein Radarpuls mit einem veränderten Signal zurückgestreut wird, dadurch gekennzeichnet, dass mittels zweier Empfangsantennen zwei Empfangssignale empfangen werden, wobei die beiden Empfangsantennen nahe zueinander platziert werden und eine Zwillingsantenne bilden, wobei die Empfangssignale abgetastet und Samples n=1..N der Empfangssignale erzeugt werden, wobei A(n) eine Zufallsvariable der Rauschsignalspannung des n-Samples beschreibt, wobei B(n) eine Zufallsvariable der Rauschsignalspannung des n-Samples beschreibt, wobei C(n) eine Zufallsvariable des am Flugkörper gestreuten Radarpulses des n-Samples beschreibt, wobei die Zufallsvariablen der Empfangssignale A(n)+C(n) bzw. B(n)+C(n) jeweils einen Rauschanteil A(n) bzw. B(n) und im Fall der Rückstreuung jeweils einen zusätzlichen durch die Flächenelemente beeinflussten Signalanteil C(n) aufweisen, wobei die Samples der Zufallsvariablen der Empfangssignale zunächst multipliziert werden und die multiplizierten Samples über ein gleitendes Zeitfenster summiert werden und ein Signal $S = \sum_{n=1}^{N}[C(n) + A(n)] \cdot [C(n) + B(n)]$ bestimmt wird, wobei ein Erwartungswert

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

bestimmt wird, wobei der Erwartungswert E{S} mit einem Schwellwert verglichen wird, wobei festgestellt wird, ob ein gemeinsames Signal (SC) in beiden Empfangssignalen vorhanden ist oder nicht.

Das Radarsystem dient zur Ausführung des Verfahrens und weist eine Sendeantenne, zwei Empfangsantennen und eine Auswerteschaltung auf. Mittels der Sendeantenne sind Sendepulse sendbar sind und mittels der beiden Empfangsantennen sind Empfangssignale empfangbar, wobei die Empfangssignale mittels der Auswerteschaltung wie folgt auswertbar sind, wobei die Empfangssignale abtastbar und Samples n=1...N der Empfangssignale erzeugbar sind, wobei die Samples der Empfangssignale zunächst multiplizierbar und die multiplizierten Samples über ein gleitendes Zeitfenster summierbar sind und ein Signal $S = \sum_{n=1}^{N}[C(n) + A(n)] \cdot [C(n) + B(n)]$ bestimmt wird, wobei ein Erwartungswert

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

bestimmbar ist, wobei der Erwartungswert E{S} mit einem Schwellwert vergleichbar ist, wobei feststellbar ist, ob ein gemeinsames Signal (SC) in beiden Empfangssignalen vorhanden ist oder nicht

Das Radarsystem dient insbesondere zur Ausführung des Verfahrens und weist eine Sendeantenne, zwei Empfangsantennen und eine Auswerteschaltung auf. Mittels der Sendeantenne sind Sendepulse sendbar sind und mittels der beiden Empfangsantennen sind Empfangssignale empfangbar, wobei die beiden Empfangsantennen nahe zueinander platziert sind und eine Zwillingsantenne bilden, wobei die Empfangssignale mittels der Auswerteschaltung wie folgt auswertbar sind, wobei die Empfangssignale abtastbar und Samples n=1...N der Empfangssignale erzeugbar sind, wobei Zufallsvariablen der Empfangssignale A(n)+C(n) bzw. B(n)+C(n) jeweils einen Rauschanteil A(n) bzw. B(n) und im Fall der Rückstreuung jeweils einen zusätzlichen durch die Flächenelemente beeinflussten Signalanteil C(n) aufweisen, wobei die Samples der Empfangssignale zunächst multiplizierbar und die multiplizierten Samples über ein gleitendes Zeitfenster summierbar sind und ein Signal $S = \sum_{n=1}^{N}[C(n) + A(n)] \cdot [C(n) + B(n)]$ bestimmt wird, wobei ein Erwartungswert

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

bestimmbar ist, wobei der Erwartungswert E{S} mit einem Schwellwert vergleichbar ist, wobei feststellbar ist, ob ein gemeinsames Signal (SC) in beiden Empfangssignalen vorhanden ist oder nicht.

Es werden mindestens zwei Empfangsantennen verwendet. Jeweils zwei der Empfangsantennen bilden eine Zwillingsantenne. Es können mehrere solcher Zwillingsantennen verwendet werden. Insbesondere kann jeder Peilempfänger mit einer Zwillingsantenne ausgerüstet werden. Es ist denkbar, dass auch das Suchradar mit einer Zwillingsantenne ausgerüstet wird.

Die beiden Empfangsantennen sind nahe zueinander zu platzieren, damit beide das gestreute elektromagnetische Feld so erfassen, dass keine gravierenden Laufzeitunterschiede auftreten. Die Laufzeitunterschiede und somit der Abstand beider Antennen 10a und 10b sollen die Kohärenzdauer des Signals SC nicht überschreiten. Mit der Kohärenzdauer wird jener Zeitdauer bezeichnet, in welcher die Autokorrelation eine Korrelation zwischen dem originalen Signal SC und einer um eine gewissen Zeit verschobene Kopie des Signalverlaufes SC zeigt. Um die gegenseitige Kopplung dieser "Zwillingsantennen"-Anordnung auf ein tolerierbares Maß zu senken, ist ein Design entsprechen auszuführen. In der Umgebung der beiden Antennen 10a, 10b, wie auch im Zwischenraum werden Elemente eingesetzt, um die gegenseitige Kopplung bzw. Beeinflussung zu minimieren.

Eine insbesondere omnidirektionale Sendeantenne sendet Sendepulse mit einer bestimmten Zeitdauer und bei einer bestimmten Trägerfrequenz aus. Die Trägerfrequenz und ihre Bandbreite sind so zu wählen, dass keine fremden Radarsysteme, keine Funkdienste oder andere künstliche Quellen in diesem Frequenzbereich senden. Des Weiteren soll auch die Hintergrundstrahlung bei der Frequenzplanung mitberücksichtigt werden. Die Pulsdauer wird aus der Multiplikation einer vorab festgelegten von Anzahl von Samples (N) 25 mit einer vordefinierte Abtastrate berechnet. Diese Sendepulse können codiert oder uncodiert sein. Bevorzugt befindet sich die Sendeantenne am Ort des Suchradars. Die Sendeantenne kann Teil des Suchradars sein. Die Sendepulse können somit von einer Sendeantenne des Suchradars gesendet werden. Alternativ kann eine zusätzliche Sendeantenne an einer anderen Stelle als das Suchradar angeordnet werden.

Die von den Empfangsantennen jeweilig empfangenen Signale werden vorzugsweise getrennt gefiltert und verstärkt und Analog-Digital (A/D) 15, 16 gewandelt. Durch die elektronischen Bauelemente in den jeweiligen Empfangspfaden enthalten die Empfangssignale je ein Rauschen bzw. Rauschanteile. Dieses Rauschen vermindert die Detektierbarkeit eines Signals SC des Radarpulses 6.

Die A/D-Wandlung wird vorzugsweise von einer gemeinsamen Abtastfrequenz-Erzeugung 17 betrieben, damit Jitter im Abtasttakt keinen Einfluss auf die Arbeitsweise hat.

Es darf angenommen werden, dass die additiven Rauschsignale in den jeweiligen Empfangspfaden voneinander statistisch unabhängig, unkorreliert und ohne Gleichanteile sind. Dies bedeutet, dass die jeweiligen Erwartungswerte der N-Samples der Rauschspannungswerte A(n) und B(n), welche Zufallsvariablen sind, zu Null werden: $E\{A(n)\} = E\{B(n)\} = 0$ , wobei $n = 1 \dots N$ ist. In Radarempfängern ist dies der Normalfall.

Nach der A/D-Wandlung 15, 16 werden die entsprechenden Samples der beiden Pfade, also vereinfacht für das n-te Sample Pa: $[C(n) + A(n)]$ und Pb: $[C(n) + B(n)]$, zuerst miteinander multipliziert 25 und über ein gleitendes Zeitfenster aufsummiert. Die zeitliche Länge des Zeitfensters entspricht der Anzahl Samples N. Bei jedem Aufsummierungsvorgang wird das Zeitfenster um einen Takt verschoben, d.h. der älteste Wert wird von der Summe subtrahiert und der aktuelle Wert zum Ergebnis addiert.

Das Ausgangssignal der Summation wird dann einem Schwellwert-Detektor 18 zugeführt, welcher dann entscheidet, ob in beiden Empfangssignalen ein gemeinsames Signal SC des gestreuten Radarpulses 6 vorhanden war. Das Signal SC des Radarpulses 6 sei statistisch unabhängig und unkorreliert zu den Rauschsignalen. Die gesampleten Signalspannungen des gestreuten Radarpulses sind Zufallsvariablen und werden mit C bzw. C(n) bezeichnet. Weiter gilt für den Erwartungswert der Signalspannung C bzw. der Zufallsvariable C $E\{C\} = 0$ *oder* $E\{C\} \neq 0$ .

Wird ein Signal SC über beide Antennen 10a und 10b empfangen, so entsteht bei der Multiplikation ein Gleichanteil. Hingegen ist die Bildung eines konstant auftretenden Gleichanteils bei den unkorrelierten und statistisch unabhängigen Rauschspannungen der beiden Empfangskanäle A und B durch das Fehlen der einzelnen Gleichanteile im Rauschen unterdrückt.

Der Sender 9 sendet über die Sendeantenne 8 in gewissen zeitlichen Abständen Pulse mit der gewählten Pulsdauer TP aus. Dabei ist die Pulsrepetitionsfrequenz PRF so niedrig gewählt, dass die Peiler sicher immer einen Puls detektieren können. Mit dieser Maßnahme müssen die Peiler keine Pulsunterscheidung vornehmen. Da nur das Ziel ein moduliertes (Streu-)Signal SC 6 erzeugt, kann zwischen den Pulsen des Normalbetriebes gemäß DE 10 2016 015 107 B3, und dem vom Ziel gestreuten Puls unterschieden werden. Daher weisen solche modulierten Pulse auf die Anwesenheit eines Flugobjektes mit aktiver "Stealth"-Anwendung hin. Wird die Sendeantenne 8 am selben Ort wie die Suchradarantenne aus DE 10 2016 015 107 B3 platziert, können die Peiler mit gleichzeitiger Auswertung der aus DE 10 2016 015 107 B3 bekannten codierten Radarpulsen und dem empfangenen Signal SC 6 zwischen Clutter und Flugobjekt unterscheiden. Radarpulse, welche durch Clutterobjekte, wie Wald, Berge oder andere Hindernisse, gestreut werden, sind immer noch ähnlich zu dem gesendeten Radarpuls. Clutter ist dann vorhanden, wenn sowohl die Methode aus DE 10 2016 015 107 B3, wie auch die hier vorgestellt Methode eine Detektion hervorruft.

Die Einfallsrichtung des Signal SC bzw. des Radarpulses 6 wird von jedem Peiler bestimmt und dem Suchradar über den schon bestehenden Informationsweg aus DE 10 2016 015 107 B3 mitgeteilt. Mittels Strahlenverfahren, wie in DE 10 2016 015 107 B3 beschrieben, kann der Aufenthaltsort des Flugobjekts bestimmt werden.

Im Folgenden dürfen wichtige Eigenschaften des aus der DE 10 2016 015 107 B3 bekannten Verfahrens nochmals erläutert werden, da diese Merkmale auch Teil des vorliegenden Verfahrens sind oder sein können.

Das Verfahren nutzt einen Suchradar und mindestens einen Peilempfänger. Vorzugsweise sind mehrere Peilempfänger vorhanden. Die Peilempfänger und das Suchradar sind nicht am selben Ort angeordnet, sondern jeweils an unterschiedlichen Orten. Hierdurch kann das Ziel aus mehreren Richtungen gepeilt werden. Von dem Suchradar werden mehrere Pulse zeitlich beabstandet mit unterschiedlichen Codes und/oder mit unterschiedlichen Signalformen gesendet. Die Codes werden zufällig erzeugt. Die Signalformen werden zufällig variiert.

Die Codes werden von einem Zufallsgenerator erzeugt. Als Codes können beispielsweise N-stellige binäre Zahlen verwendet werden. Der Suchradar nutzt einen zufälligen Code und moduliert den Radarsendepuls mit diesem Code. Es wird insbesondere aus $2^N$-M möglichen N-stelligen binären Zahlen zufällig eine ausgewählt und der Radarsendepuls wird mit dieser Zahl unter Anwendung eines digitalen Modulationsverfahrens moduliert. Somit hat Suchradar aus $2^N$-M binären Zahlen die Wahl. M ist die Anzahl der binären Zahlen, welche innerhalb einer gewissen Zeitperiode schon gewählt worden sind. Alle Codes innerhalb von M Pulsrepetitionsintervallen sind vorzugsweise unterschiedlich, wobei M größer gleich 2 ist. Ist somit eine binäre Zahl gewählt worden und wird diese für ein Pulsrepetitionsintervall genutzt, so soll diese erst nach einer gewissen Zeit wieder wählbar sein. Wird N groß gewählt, z.B. N=7 und M=2, so ergibt sich für jedes Pulsrepetitionsintervall PRI 126 wählbare binäre Zahlen. Dabei wird die schon gewählte Zahl für die Dauer von M=2 Pulsrepetitionsintervallen gesperrt, kann aber nach dem zweiten Pulsrepetitionsintervall wieder gewählt werden. Ist die Zahl N genügend groß, so kann diese sogar öffentlich bekannt sein, d.h. der Gegner darf diese wissen. Hingegen kann M eine geheime feste Größe sein oder sogar auch mit einem Zufallsgenerator im Suchradar bestimmt werden. Es muss aber M > 1 gelten. Mit dieser Maßnahme ist das Pulsrepetitionsintervall immer mit einer eindeutigen Nummer versehen und alle Pulse, welche diesem Pulsrepetitionsintervall angehören, können diesem Pulsrepetitionsintervall und somit einer zeitlichen Gültigkeit zugeordnet werden.

Als weitere Variante kann jeder Zahl eine besondere Signalform zugeordnet werden. Diese Signalformen sind vorzugsweise so zu wählen, dass diese orthogonal zueinander sind. Somit kann der Empfänger mit Hilfe eines signalangepassten Filters die besondere, aktuelle Signalformen aus einer Fülle von anderen empfangenen Signalformen extrahieren. Damit lassen sich auch Mehrwegausbreitungseffekte soweit bearbeiten, dass das erwünschte empfangene Signal zeitlich von den anderen empfangenen Signalen getrennt werden kann.

Es kann eine konstante Trägerfrequenz für alle Sendepulse verwendet werden. Wird aufgrund einer Veränderung und/oder Fluktuation des Radarrückstrahlquerschnitts der Einsatz mehrerer Sendefrequenzen nötig, um die Wahrscheinlichkeit einer Zieldetektion zu erhöhen, kann die Anzahl der Trägerfrequenzen erhöht werden. Dabei soll eine Anzahl von K=4 als typischer Nennwert gelten. Die Verwendung mehrerer Frequenzen ist auch als Frequency-Diversity bekannt und dient allein der Erhöhung der Zieldetektionswahrscheinlichkeit bei stark fluktuierenden Radarrückstrahlquerschnitten. Da heutige Störer in der Lage sind, ein breites Frequenzband simultan mit einem Rauschsignal zu stören, sind Frequenzwechsel als elektronische Gegenmaßnahmen nicht mehr anwendbar. In diesem Sinne genügt nur eine Sendefrequenz, um die Ausführung des Radarsystems einfach zu halten.

Der Suchradar erzeugt einen Burst der aus Q-Pulsen besteht, welche vorzugsweise jede mit einer anderen zufällig gewählten binären Zahl mit Hilfe eines digitalen Modulationsverfahrens auf die Trägerfrequenz moduliert ist. Das Pulswiederholungsintervall kann dabei konstant sein oder von Puls zu Puls innerhalb der Burstdauer geändert werden. Das Täuschsystem, im Folgenden DRFM-System genannt, kann nur dann einen empfangenen Radarsendepuls kopieren und modifizieren, wenn dieser beim Standort des DRFM-Systems ankommt. Will ein DRFM-System einen Suchradar mit einem Täuschsignal bzw. Falschzielpuls vor dem Eintreffen des eigentlichen Radarsendepulses ein Falschziel räumlich vor dem realen Standort des Zieles vortäuschen, so muss auf die schon empfangenen Sendepulse zurückgegriffen werden. Ändert nun der Suchradar die Pulsparameter von Radarsendepuls zu Sendepuls so ist das DRFM-System nicht mehr in der Lage, Falschziele in einer Distanz kürzer als die echte Distanz zum Ziel vorzutäuschen. Dies schränkt das Vortäuschen von Falschziel-Distanzen auf das räumliche Gebiet hinter dem echten Ziel bis zur Instrumented Range, d.h. der maximalen eindeutig bestimmbaren Distanz, ein.

Das Täuschsystem bzw. DRFM-System ist typischerweise auf einem Flugobjekt installiert und besitzt eine Empfangs- und eine Senderantenne. Dies bedeutet, dass das DRFM-System physikalisch nur in einem einzigen festgelegten Ort im Raum sein kann. Das DRFM-System kann durch Side-Lobe-Jamming versuchen, dem Suchradar vorzutäuschen, dass sich das Ziel im Azimut an einem anderen Ort befindet. Side-Lobe-Jamming bedeutet, dass die Suchradar-Empfangsantenne ein Täuschsignal über ihre Antennennebenkeulen empfängt, aber das Radar annimmt, dass das empfangene Signal durch die Antennen-Hauptkeulen empfangen wurde. Da aber die Sendeantenne des DRFM-Systems sich physikalisch nur an einem Ort befinden kann, kann durch Feststellen des Ortes der Quelle des elektromagnetischen Feldes ein Täuschversuch entdeckt werden, da durch Zusammenführen der Daten der Suchradar erkennt, dass das Falschziel gar nicht in der Antennen-Hauptkeule der Suchradar-Empfangsantenne sein kann. Als Nebeneffekt besteht auch die Möglichkeit zwischen Bodenclutter und dem Ziel zu unterscheiden, wenn sich der Bodenclutter in derselben Auflösungszelle wie das Ziel befindet. Auch in diesem Fall sind die Quellen der Streuung voneinander räumlich im Azimut der Elevation getrennt.

Ein besonderer Vorteil der Erfindung ist nun der Einsatz von mindestens einem, insbesondere mehreren Peilempfängern. Diese Peilempfänger können passiv ausgestaltet sein. Der Gegner darf sogar wissen, wo die Peilempfänger stehen.

Durch die physikalische Bedingung, dass die Quelle des Täuschsignals, nämlich die DRFM-Sendeantenne an einem Flugzeug befestigt ist, ist der Standort eindeutig bestimmbar. Auch wenn das DRFM-System versucht mit Hilfe von über dem Flugzeug verteilten Antennen die Phasenfront zu manipulieren, so ist aufgrund der endlichen Ausdehnung des Flugzeugs und durch den Einsatz von mehreren räumlich verteilten Peilempfängern ein räumliches Täuschen nicht oder lediglich unter theoretischen Bedingungen möglich. In der Praxis werden diese theoretischen Bedingungen nie erreicht, da viele Parameter, wie die Standorte der Peilempfänger oder die Ausrichtung der DRFM-Antennen nie aufeinander abgestimmt sein werden.

Als Suchradar wird insbesondere ein monostatisches Suchradar verwendet. Die Peilempfänger arbeiten asynchron zum monostatischen Suchradar. Eine genaue Zeitsynchronisation ist nicht nötig, da die Peilempfänger keine Laufzeit des Radarsendepulses von der Radarantenne über das Ziel bis zu den Peilantennen messen müssen. Die Peilempfänger und das Suchradar empfangen die am Ziel gestreuten oder von der Täuschvorrichtung ausgesandten Empfangspulse.

Durch mehrere Abfragen kann nun ermittelt werden, ob es sich bei den Empfangspulsen um das gewünschte Nutzsignal oder um ein Täuschsignal handelt. Es wird zunächst überprüft, ob die Empfangspulse in einem bestimmten Zeitfenster nach dem Aussenden von dem Peilempfänger empfangen worden sind. Es wird die Laufzeit eines Signals zwischen dem mindestens einen Peilempfänger und dem Suchradar bestimmt, wobei das Zeitfenster zum Empfang des Empfangspulses aufgrund der Laufzeit und der Größe des zu überwachenden Gebietes berechnet wird. Empfangspulse, die außerhalb des Zeitfensters den jeweiligen Peilempfänger erreichen, werden nicht als Nutzsignal angesehen. Dieses Zeitfenster wird für jeden ausgesandten Puls und für jeden Peilempfänger bestimmt.

Ferner wird überprüft, ob die Empfangspulse den zugehörigen Code aufweisen. Wenn diese beiden Bedingungen erfüllt sind, so wird mittels der Peilempfänger die Empfangsrichtung des Empfangspulses bestimmt und ferner wird die Empfangsrichtung mittels des Suchradars bestimmt. Aus dem Vergleich der Empfangsrichtung kann überprüft werden, ob die Empfangspulse aus einem gemeinsamen Zielgebiet stammen. Wenn die Empfangsrichtungen alle einem Zielgebiet zugeordnet werden können, so handelt es sich nicht um ein Täuschsignal, sondern um ein Nutzsignal. Durch das dreidimensionale Peilen eines eintreffenden elektromagnetischen Feldes, nämlich der entsprechenden Empfangspulse und den daraus gemessenen Peilwerten, hat der Suchradar durch Kombinierung aller Peilwerte die Möglichkeit auch zwischen Bodenclutter und dem Ziel zu unterscheiden.

Die eingangs genannten Nachteile sind daher vermieden und entsprechende Vorteile sind erzielt.

Es gibt nun eine Vielzahl von Möglichkeiten, das erfindungsgemäße Verfahren und das Radarsystem auszugestalten und weiterzubilden. Hierfür darf zunächst auf die dem Patentanspruch 1 nachgeordneten Patentansprüchen verwiesen werden. Im Folgenden wird anhand der Zeichnung und der dazugehörigen Beschreibung die Erfindung näher erläutert. In der Zeichnung zeigt:

Fig. 1 in einer schematischen Darstellung einen Flugkörper und ein Suchradar, wobei ein Sendepuls an Flächenelementen aus Metamaterial am Flugkörper gestreut werden und in Form eines gestreuten Radarpulses vom Suchradar empfangen werden,

Fig. 2 eine Schaltungsanordnung zur Bestimmung, ob ein am Flugkörper gestreuter Radarpuls mit einem Signal SC von zwei Empfangsantennen detektiert worden ist, und

Fig. 3 ein Diagramm mit einem Simulationsergebnis, wobei ein Signal S über eine Anzahl von Realisationen als Kurvenschar aufgezeichnet ist.

Wie bereits beschrieben wird in Fig. 1 ein Sendepuls 4 von einem Flugkörper 1 gestreut, wobei Flächenelemente 2 aus Metamaterial am Flugkörper 1 ein Rauschsignal aus dem Sendepuls 4 erzeugen. Um dies zu erkennen wird nun eine Zwillingsantenne mit zwei Empfangsantennen 10a, 10b verwendet, die ein Signal SC des gestreuten Radarpulses 6 empfangen. Die Empfangsantennen 10a, 10b sind nahe zueinander zu platzieren, damit beide das gestreute elektromagnetische Feld, hier in Form des Signals SC so erfassen, dass keine gravierenden Laufzeitunterschiede auftreten. Um die gegenseitige Kopplung dieser "Zwillingsantennen"-Anordnung auf ein tolerierbares Maß zu senken, ist das Design entsprechen auszuführen.

Jeder Peilempfänger und ggf. der Suchradar 3 sind mit einer Zwillingsantenne ausgerüstet.

Zusätzlich zum normalen Betrieb, wie dieser in DE 10 2016 015 107 B3 beschrieben ist, sendet eine omnidirektionale Sendeantenne 8 Sendepulse mit bestimmter Zeitdauer TP, 5 aus. Die Pulsdauer wird aus den Anzahl Samples N, 25 und der vordefinierte Abtastrate, die aus Abtastfrequenz-Erzeugung 17 bekannt ist, berechnet. Die Sendepulse werden mit einer Signalaufbereitung 9 erzeugt. Diese Sendepulse können codiert oder uncodiert sein. Weiter darf die Sendefrequenz von jener für den Normalbetrieb abweichen. Die Sendefrequenz und ihre Bandbreite sind so zu wählen, dass keine fremde Radarsysteme, keine Funkdienste oder andere künstliche Quellen in diesem Frequenzbereich senden. Des Weiteren soll auch die Hintergrundstrahlung bei der Frequenzplanung mitberücksichtigt werden. Bevorzugt befindet sich die Sendeantenne 8 am Ort des Suchradars 3.

In Fig. 2 wird der Signalverlauf schematisch dargestellt. Das Geräterauschen NA 22 und NB 23 wird wie üblich in der Radartechnik als additives Rauschen modelliert. Das Geräterauschen NA 22 und NB 23 wird durch die Zufallsvariablen A und B ausgedrückt. Die dem zugehörigen Geräterauschen NA 22 und NB 23 zugehörigen Zufallsvariablen A und B sind zueinander statistisch unabhängig und unkorreliert.

Die jeweiligen empfangenen Signale werden über die Pfade Pa, 12 und Pb 13 getrennt gefiltert und verstärkt 12, 13 und Analog-Digital (A/D) 15, 16 gewandelt. Durch die elektronischen Bauelemente in den jeweiligen Empfangspfaden, wird Rauschen NA ,22 und NB, 23 den Empfangssignalen zugeführt. Dieses Rauschen vermindert die Detektierbarkeit des Signals SC, 6.

Die A/D-Wandlung 15, 16 wird von einer gemeinsamen Abtastfrequenz-Erzeugung 17 betrieben, damit Jitter keinen Einfluss auf die Arbeitsweise hat.

Es darf angenommen werden, dass die additiven Rauschsignale NA, 22 und NB, 23 in den jeweiligen Empfangspfaden Pa, Pb voneinander statistisch unabhängig, unkorreliert und ohne Gleichanteile sind. Dies bedeutet, dass die jeweiligen Erwartungswerte der N-Samples der Rauschspannungswerte $A(n)$ und $B(n)$, welche Zufallsvariablen sind, zu Null werden: $E\{A(n)\} = E\{B(n)\} = 0$ , wobei $n = 1 \ldots N$ ist. In Radarempfängern ist dies der Normalfall.

Nach der A/D-Wandlung 15, 16 werden die entsprechenden Samples der beiden Pfade, also vereinfacht für das n-te Sample Pa: $[C(n) + A(n)]$ und Pb: $[C(n) + B(n)]$, zuerst miteinander multipliziert 24 und über eine gleitendes Zeitfenster aufsummiert 26. Die zeitliche Länge des Zeitfensters entspricht der Anzahl Samples N, 25. Bei jedem Aufsummierungsvorgang wird das Zeitfenster um einen Takt verschoben, d.h. der älteste Wert wird von der Summe subtrahiert und der aktuelle Wert zum Ergebnis addiert.

Das Ausgangssignal der Summation wird dann einem Schwellwert-Detektor 18 zugeführt, welcher dann entscheidet, ob in beiden Empfangssignalen ein gemeinsames Signal SC vorhanden war.

Das Signal SC des gestreuten Radarpulses 6 sei statistisch unabhängig und unkorreliert zu den Rauschsignalen NA 22 und NB 23. Weiter gilt für den Erwartungswert der Signalspannung C, welche auch eine Zufallsvariable ist, $E\{C\} = 0$ oder $E\{C\} \neq 0$ .

Wird ein Signal SC des gestreuten Radarpulses 6 über beide Antennen 10a und 10b empfangen, so entsteht bei der Multiplikation 24 ein Gleichanteil. Hingegen ist die Bildung eines konstant auftretenden Gleichanteils bei den unkorrelierten und statistisch unabhängigen Rauschspannungen NA und NB durch das Fehlen der einzelnen Gleichanteile im Rauschen unterdrückt.

Der Sender 9 sendet in gewissen zeitlichen Abständen Pulse mit der gewählten Pulsdauer TP 5 aus. Dabei ist die Pulsrepetitionsfrequenz PRF so niedrig gewählt, dass die Peiler sicher immer einen Puls detektieren können. Mit dieser Maßnahme müssen die Peiler keine Pulsunterscheidung vornehmen. Da nur das Ziel ein moduliertes Streusignal SC erzeugt, kann zwischen den Pulsen des Normalbetriebes gemäß DE 10 2016 015 107 B3, und dem vom Ziel gestreuten Puls unterschieden werden. Daher weisen solche modulierten Pulse auf die Anwesenheit eines Flugobjektes 1 mit aktiver "Stealth"-Anwendung hin.

Die Einfallsrichtung des Signals SC 6 bzw. des am Flugkörper 1 gestreuten Radarpulses 6 wird von jedem Peilempfänger bestimmt und dem Suchradar 3 über den schon bestehenden Informationsweg aus der DE 10 2016 015 107 B3 mitgeteilt. Mittels Strahlenverfahren, wie in DE 10 2016 015 107 B3 beschrieben, kann der Aufenthaltsort des Flugkörpers 1 bestimmt werden.

Im Folgenden soll das Prinzip mathematisch anhand der Erwartungswerte näher erläutert werden. Diese Abhandlung dient der Präzisierung der vorgängigen Beschreibung und ist auf das Wesentliche beschränkt.

Das Rauschsignal NA, 22 hat einen Erwartungswert $E\{A(n)\} = 0$, wobei A(n) eine Zufallsvariable der Rauschsignalspannung des n-Samples beschreibt. Das Rauschsignal NA, 22 hat einen Erwartungswert $E\{A\} = 0$ und ist zu dem Rauschsignal NB und zu dem Signal SC statistisch unabhängig und unkorreliert.

Das Rauschsignal NB, 23 hat einen Erwartungswert $E\{B(n)\} = 0$, *wobei* B(n) eine Zufallsvariable des Rauschsignalspannung des n-Samples beschreibt. Das Rauschsignal NB hat einen Erwartungswert $E\{B\} = 0$ und ist zum Rauschsignal NA und zum Signal SC statistisch unabhängig und unkorreliert

Signal SC des Radarpulses 6:

Das Signal SC, 6 kann einen Erwartungswert gleich null oder ungleich null haben, d.h. $E\{C(n)\} = 0$ oder $E\{C(n)\} \neq 0$ , wobei C(n) eine Zufallsvariable der Signalspannung des am Flugkörper gestreuten Signals SC, 6 ist.

Es gilt immer: Zufallsvariable A(n), B(n) und C(n) sind voneinander statistisch unabhängig und unkorreliert, was in realen Systemen erfüllt ist.

Der Erwartungswert des Signales S nach dem Summierer 26 ist:

$$S = \sum_{n=1}^{N} [C(n) + A(n)] \cdot [C(n) + B(n)]$$

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

Ohne Signal SC, 6 :

$$E\{S\} = 0$$

Mit Signal SC, 6 :

$$E\{S\} = \sum_{n=1}^{N} E\{[C(n)]^2\} > 0$$

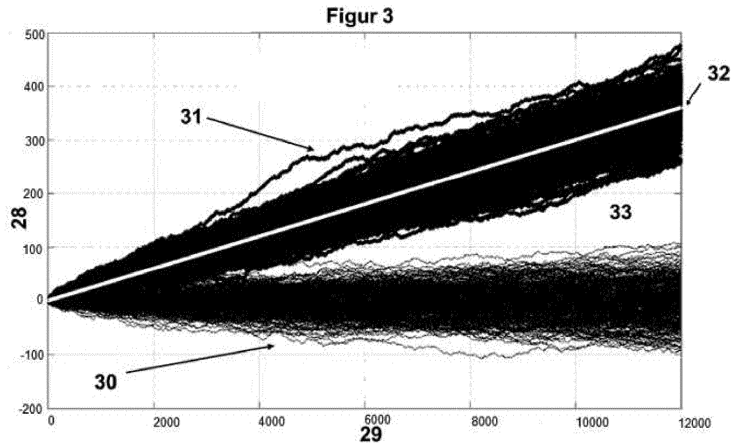

Anhand einer Simulation soll der Sachverhalt graphisch (Figur 3) verdeutlicht werden. Dabei wird vereinfacht folgende Wahrscheinlichkeitsdichtefunktionen WDF für die Zufallsvariablen vorausgesetzt.

Rauschen NA 22:

$$WDF: \quad p_A\big(a(n)\big) = \begin{cases} \frac{1}{2} \; ; \; -1 \leq a(n) \leq 1 \\ 0 \; ; \; sonst \end{cases} \quad, \; mit \; E\{A(n)\} = 0$$

Rauschen NB 23:

$$WDF: \quad p_B\big(b(n)\big) = \begin{cases} \frac{1}{2} \; ; \; -1 \leq b(n) \leq 1 \\ 0 \; ; \; sonst \end{cases} \quad, \; mit \; E\{B(n)\} = 0$$

Signal SC 6:

$$WDF: \quad p_C\big(c(n)\big) = \begin{cases} \dfrac{1}{2 \cdot A_C} \; ; \; -A_C \leq c(n) \leq A_C \\ 0 \; ; \; sonst \end{cases} \quad, \qquad mit \; E\{C(n)\} = 0$$

Weiter gilt :

$$0 \; \leq \; A_C \; \leq 1$$

Deutlich ist in Figur 3 eine freie Zone 33 zwischen den Kurvenscharen 30 ohne Signal SC und 31 mit Signal SC für N > 4000 zu sehen. Die Figur 3 gilt für ein SNR pro Kanal von -10.5dB. Somit kann die Schwelle in die freie Zone 33 gelegt werden und es kann festgestellt werden, ob ein Signal SC, 6 empfangen wurde oder nicht.

Weiter ist auch der Verlauf des Erwartungswertes 32: $E\{S\} = N \cdot E\{[C]^2\}$ eingezeichnet.

Bezugszeichenliste:

1:  Flugkörper
2:  Flächenelement aus Metamaterial, das adaptiv steuerbar ist
3:  Suchradar
4:  Sendepuls
5:  Pulsdauer TP
6:  Am Flugobjekt gestreuter (Radar-)Puls mit Signal SC und dem Signalwert C als Zufallsvariable des n-Samples
7:  Detektionsdistanz RD
8:  Omnidirektionale Sendeantenne
9:  Sendesignalaufbereitung
10a:  Empfangsantenne, Pfad Pa
10b:  Empfangsantenne, Pfad Pb
11:  Sendepulsdauer-Erzeugung und Berechnung
12:  Pfad Pa: Empfangseinheit (Bandpassfiler, Verstärker, .... )
13:  Pfad Pb: Empfangseinheit (Bandpassfiler, Verstärker, .... )
14:  Laufzeit-Justiereinheit, um die Signallaufzeiten in den Pfaden Pa und Pb anzugleichen
15:  Pfad Pa: Analog / Digital - Wandlung
16:  Pfad Pb: Analog / Digital - Wandlung
17:  Abtastfrequenz-Erzeugung
18:  Schwellwert-Detektor
19:  Pfad Pa: Schematische Darstellung für die Einkopplung des additiven Rauschsignals NA
20:  Pfad Pb: Schematische Darstellung für die Einkopplung des additiven Rauschsignals NB
21:  nicht vergeben
22:  Pfad Pa: Rauschsignal NA mit Spannungswert als Zufallsvariable A des n-Samples Das Rauschsignal NA hat einen Erwartungswert $E\{A\} = 0$ und ist zum Rauschsignal NB und Signal SC statistisch unabhängig und unkorreliert
23:  Pfad Pb: Rauschsignal NB mit Spannungswert als Zufallsvariable B des n-Samples Das Rauschsignal NB hat einen Erwartungswert $E\{B\} = 0$ und ist zum Rauschsignal NA und Signal SC statistisch unabhängig und unkorreliert

24: Multiplikator

25: N: Anzahl aufzusummierende Samples

26: Summierer über ein Zeitfenster mit N-Samples mit Ausgangsignal S

27: Ergebnis, ob ein Signal SC vorhanden ist oder nicht

28: Signal S nach dem Summierer

29: N: Anzahl Summationen

30: Kurvenschar ohne Signal SC mit 300 Realisationen

31: Kurvenschar mit Signal SC mit 300 Realisationen

32: Erwartungswert von S: $E\{S\}$

33: Freie Zone für die Bestimmung der Schwelle

**Patentansprüche**

1. Verfahren zur Detektion eines mit Flächenelementen (2) aus Metamaterialien oder "Frequency Selective Surfaces"-Materialien ausgestatteten Flugkörpers (1), wobei mittels einer Sendeantenne (8) ein Sendepuls (4) gesendet wird, wobei überprüft wird, ob der Sendepuls (4) an dem Flugkörper (1) gestreut wird, wobei im Fall der Rückstreuung mittels einer Steuerung der Flächenelemente (2) ein Radarpuls (6) mit einem veränderten Signal (SC) zurückgestreut wird, **dadurch gekennzeichnet, dass** mittels zweier Empfangsantennen (10a, 10b) zwei Empfangssignale empfangen werden, wobei die beiden Empfangsantennen nahe zueinander platziert werden und eine Zwillingsantenne bilden, wobei die Empfangssignale abgetastet und Samples n=1..N der Empfangssignale erzeugt werden, wobei A(n) eine Zufallsvariable der Rauschsignalspannung des n-Samples beschreibt, wobei B(n) eine Zufallsvariable des Rauschsignalspannung des n-Samples beschreibt, wobei C(n) eine Zufallsvariable des am Flugkörper gestreuten Radarpulses (6) des n-Samples beschreibt, wobei die Zufallsvariablen der Empfangssignale A(n)+C(n) bzw. B(n)+C(n) jeweils einen Rauschanteil A(n) bzw. B(n) und im Fall der Rückstreuung jeweils einen zusätzlichen durch die Flächenelemente beeinflussten Signalanteil C(n) aufweisen, wobei die Samples der Zufallsvariablen der Empfangssignale zunächst multipliziert werden (24) und die multiplizierten Samples über ein gleitendes Zeitfenster summiert werden und ein Signal $S = \sum_{n=1}^{N}[C(n) + A(n)] \cdot [C(n) + B(n)]$ bestimmt wird, wobei ein Erwartungswert

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

bestimmt wird, wobei der Erwartungswert E{S} mit einem Schwellwert verglichen wird, wobei festgestellt wird, ob ein gemeinsames Signal (SC) in beiden Empfangssignalen vorhanden ist oder nicht.

2. Verfahren nach Anspruch 1, **dadurch gekennzeichnet, dass** eine A/D-Wandlung (15, 16) der Empfangssignale von einer gemeinsamen Abtastfrequenzerzeugung (17) betrieben wird.

3. Verfahren nach Anspruch 1 oder 2, **dadurch gekennzeichnet, dass** die Länge der Sendepulse aus einer vorbestimmten Anzahl (N, 25) von Samples und einer vordefinierten Abtastrate durch Multiplikation bestimmt wird.

4. Verfahren zum Betreiben eines Radarsystems zur Vermeidung von Täuschungen durch Dritte, wobei eine Verbindung zwischen mindestens einem Peilempfänger und einem Suchradar bereitgestellt wird, wobei von dem Suchradar (3) mehrere Pulse mit unterschiedlichen Codes gesendet und/oder mit unterschiedlichen Signalformen gesendet werden, wobei die Peilempfänger und/oder das Suchradar an dem Flugkörper (1) gestreute Pulse (6) empfangen, wobei überprüft wird, ob diese Empfangspulse (6) an einem Ziel gestreut sind und damit ein Nutzsignal bilden oder durch Täuschsignale gebildet sind, wobei mittels des mindestens einen Peilempfängers und/oder des Suchradars Empfangsrichtungen der Empfangspulse (6) bestimmt werden, wobei überprüft wird, ob die Empfangsrichtungen einem gemeinsamen Zielgebiet zugeordnet werden können und somit ein Nutzsignal bilden oder keinem gemeinsamen Zielgebiet zugeordnet sind und somit ein Täuschsignal bilden, wobei der Suchradar (3) und/oder die Peilempfänger jeweils mit zwei Empfangsantennen ausgerüstet ist/sind zur zusätzlichen Durchführung des Verfahrens gemäß Anspruch 1.

5. Verfahren nach Anspruch 4, **dadurch gekennzeichnet, dass** die Sendeantenne (8) Teil des Suchradars (3) ist.

6. Verfahren nach einem der vorstehenden Ansprüche 4 oder 5, **dadurch gekennzeichnet, dass** die Pulsrepetitionsfrequenz (PRF) der Sendeantenne (9) so niedrig gewählt wird, dass die Peilempfänger sicher immer einen Radarpuls (6) registrieren können.

7. Verfahren nach einem der vorstehenden Ansprüche 4 bis 6, **dadurch gekennzeichnet, dass** die Codes zufällig erzeugt werden.

8. Verfahren nach einem der vorstehenden Ansprüche 4 bis 7, **dadurch gekennzeichnet, dass** alle Codes innerhalb von M Pulsrepetitionsintervallen unterschiedlich gewählt werden, wobei M größer gleich 2 ist.

9. Verfahren nach einem der vorstehenden Ansprüche 4 bis 8, **dadurch gekennzeichnet, dass** die Signalform zufällig gewählt und von Sendepuls zu Sendepuls variiert wird.

10. Verfahren nach einem der vorstehenden Ansprüche 4 bis 9, **dadurch gekennzeichnet, dass** eine konstante Trägerfrequenz für alle Sendepulse verwendet wird.

11. Verfahren nach einem der vorstehenden Ansprüche 4 bis 10, **dadurch gekennzeichnet, dass** überprüft wird, ob der Empfangspuls in einem bestimmten Zeitfenster nach dem Aussenden des Sendepulses von dem Peilempfänger und/oder vom Suchradar empfangen worden ist.

12. Verfahren nach einem der vorstehenden Ansprüche 4 bis 11, **dadurch gekennzeichnet, dass** die Laufzeit eines Signals zwischen dem mindestens einen Peilempfänger (21, 22, 23) und dem Suchradar (20) bestimmt wird, wobei das Zeitfenster zum Empfang des Empfangspulses aufgrund der Laufzeit und der Größe des zu überwachenden Gebietes berechnet wird.

13. Verfahren nach einem der vorstehenden Ansprüche 4 bis 12, **dadurch gekennzeichnet, dass** mehrere Peilempfänger (21, 22, 23) verwendet werden.

14. Radarsystem zur Ausführung des Verfahrens nach einem der vorstehenden Ansprüche, mit einer Sendeantenne (8) und mit zwei Empfangsantennen (10a, 10b) und einer Auswerteschaltung, wobei mittels der Sendeantenne (8) Sendepulse (4) sendbar sind und mittels der beiden Empfangsantennen (10a, 10b) Empfangssignale empfangbar sind, wobei die beiden Empfangsantennen nahe zueinander platziert sind und eine Zwillingsantenne bilden, wobei die Empfangssignale mittels der Auswerteschaltung auswertbar sind, wobei die Empfangssignale abtastbar und Samples n=1..N der Empfangssignale erzeugbar sind, wobei A(n) eine Zufallsvariable der Rauschsignalspannung des n-Samples beschreibt, wobei B(n) eine Zufallsvariable der Rauschsignalspannung des n-Samples beschreibt, wobei C(n) eine Zufallsvariable des am Flugkörper gestreuten Radarpulses (6) des n-Samples beschreibt wobei die Empfangssignale A(n)+C(n) bzw B(n)+C(n) jeweils einen Rauschanteil A(n) bzw. B(n) und im Fall der Rückstreuung jeweils einen zusätzlichen durch die Flächenelemente beeinflussten Signalanteil C(n) aufweisen, wobei die Samples der Zufallsvariablen der Empfangssignale zunächst multiplizierbar (24) und die multiplizierten Samples über ein gleitendes Zeitfenster summierbar sind und ein Signal $S = \sum_{n=1}^{N}[C(n) + A(n)] \cdot [C(n) + B(n)]$ bestimmbar ist, wobei ein Erwartungswert

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

bestimmbar ist, wobei der Erwartungswert E{S} mit einem Schwellwert vergleichbar ist, wobei feststellbar ist, ob ein gemeinsames Signal (SC) in beiden Empfangssignalen vorhanden ist oder nicht.

**Claims**

1. Method for detecting a flying object (1) equipped with surface elements (2) made of metamaterials or "Frequency Selective Surfaces" materials, wherein a transmission pulse (4) is transmitted by a transmitting antenna (8), wherein a check is carried out as to whether the transmission pulse (4) is scattered at the flying object (1), wherein in the event of backscattering by controlling the surface elements (2) a radar pulse (6) having a modified signal (SC) is backscattered, **characterized in that** two receive signals are received by two receiving antennas (10a, 10b), wherein the two receiving antennas are placed close to each other and form a twin antenna, wherein the receive signals are sampled and samples n=1..N of the receive signals are generated, wherein A(n) describes a random variable of the noise signal voltage of the nth sample, wherein B(n) describes a random variable of the noise signal voltage of the nth sample, wherein C(n) describes a random variable of the radar pulse (6) of the nth sample scattered at the flying object, wherein the random variables of the receive signals A(n)+C(n) or B(n)+C(n) each have a noise component A(n) or B(n) and in the event of backscattering each have an additional signal component C(n) influenced by the surface elements, wherein the samples of the random variables of the receive signals are initially multiplied (24) and the multiplied samples are summed over a sliding time window and a signal is determined, wherein an expected value

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

is determined, wherein the expected value E{S} is compared with a threshold value, wherein it is ascertained whether or not a common signal (SC) is present in the two receive signals.

2. Method according to Claim 1, **characterized in that** an A/D conversion (15, 16) of the receive signals from a common sampling frequency generation (17) is performed.

3. Method according to Claim 1 or 2, **characterized in that** the length of the transmission pulses is determined by multiplication from a predetermined number (N, 25) of samples and a predefined sampling rate.

4. Method for operating a radar system to prevent deception by third parties, wherein a connection is provided between at least one direction-finding receiver and a search radar, wherein a plurality of pulses having different codes and/or having different signal waveforms are transmitted by the search radar (3), wherein the direction-finding receivers and/or the search radar receive pulses (6) scattered at the flying object (1), wherein a check is carried out as to whether these receive pulses (6) are scattered at a target and thus form a useful signal or are formed by deception signals, wherein receiving directions of the receive pulses (6) are determined by the at least one direction-finding receiver and/or the search radar, wherein a check is carried out as to whether the receiving directions can be assigned to a common target area and thus form a useful signal or are not assigned to a common target area and thus form a deception signal, wherein the search radar (3) and/or the direction-finding receivers are/is each equipped with two receiving antennas in order to additionally carry out the method according to Claim 1.

5. Method according to Claim 4, **characterized in that** the transmitting antenna (8) is part of the search radar (3).

6. Method according to either of preceding Claims 4 and 5, **characterized in that** the pulse repetition frequency (PRF) of the transmitting antenna (9) is selected to be so low that the direction-finding receivers can always reliably register a radar pulse (6).

7. Method according to one of preceding Claims 4 to 6, **characterized in that** the codes are generated randomly.

8. Method according to one of preceding Claims 4 to 7, **characterized in that** all codes are selected to be different within M pulse repetition intervals, wherein M is greater than or equal to 2.

9. Method according to one of preceding Claims 4 to 8, **characterized in that** the signal waveform is randomly selected and varied from transmission pulse to transmission pulse.

10. Method according to one of preceding Claims 4 to 9, **characterized in that** a constant carrier frequency is used for all transmission pulses.

11. Method according to one of preceding Claims 4 to 10, **characterized in that** a check is carried out as to whether the receive pulse was received by the direction-finding receiver and/or by the search radar in a determined time window after the transmission pulse was sent.

12. Method according to one of preceding Claims 4 to 11, **characterized in that** the time of flight of a signal between the at least one direction-finding receiver (21, 22, 23) and the search radar (20) is determined, wherein the time window for receiving the receive pulse is calculated on the basis of the time of flight and the size of the area to be monitored.

**13.** Method according to one of preceding Claims 4 to 12, **characterized in that** a plurality of direction-finding receivers (21, 22, 23) are used.

**14.** Radar system for implementing the method according to one of the preceding claims, having a transmitting antenna (8) and having two receiving antennas (10a, 10b) and an evaluation circuit, wherein transmission pulses (4) are able to be transmitted by the transmitting antenna (8) and receive signals are able to be received by the two receiving antennas (10a, 10b), wherein the two receiving antennas are placed close to each other and form a twin antenna, wherein the receive signals are able to be evaluated by the evaluation circuit, wherein the receive signals are able to be sampled and samples n=1..N of the receive signals are able to be generated, wherein A(n) describes a random variable of the noise signal voltage of the nth sample, wherein B(n) describes a random variable of the noise signal voltage of the nth sample, wherein C(n) describes a random variable of the radar pulse (6) of the nth sample scattered at the flying object, wherein the receive signals A(n)+C(n) or B(n)+C(n) each have a noise component A(n) or B(n) and in the event of backscattering each have an additional signal component C(n) influenced by the surface elements, wherein the samples of the random variables of the receive signals are initially able to be multiplied (24) and the multiplied samples are able to be summed over a sliding time window and a signal

$$S = \sum_{n=1}^{N}[C(n) + A(n)] \cdot [C(n) + B(n)]$$ is able to be determined, wherein an expected value

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

is able to be determined, wherein the expected value E{S} is able to be compared with a threshold value, wherein it is possible to ascertain whether or not a common signal (SC) is present in the two receive signals.


**Revendications**

**1.** Procédé pour détecter un missile (1) équipé d'éléments de surface (2) composés de métamatériaux ou de matériaux à « surfaces sélectives en fréquence », une impulsion d'émission (4) étant émise au moyen d'une antenne d'émission (8), une vérification étant effectuée pour contrôler si l'impulsion d'émission (4) est diffusée au niveau du missile (1),

dans le cas de la rétrodiffusion, une impulsion radar (6) étant rétrodiffusée avec un signal modifié (SC) par commande des éléments de surface (2),
**caractérisé en ce que** deux signaux de réception sont reçus au moyen de deux antennes de réception (10a, 10b), les deux antennes de réception étant placées à proximité l'une de l'autre et formant une antenne jumelée, les signaux de réception étant échantillonnés et des échantillons n=1..N des signaux de réception étant générés, A(n) représentant une variable aléatoire de la tension du signal de bruit de l'échantillon n, B(n) représentant une variable aléatoire de la tension du signal de bruit de l'échantillon n, C(n) représentant une variable aléatoire de l'impulsion radar (6), diffusée par le missile, de l'échantillon n, les variables aléatoires des signaux de réception A(n)+C(n) ou B(n)+C(n) comprenant respectivement une composante de bruit A(n) ou B(n) et, dans le cas de la rétrodiffusion, respectivement une composante de signal supplémentaire C(n) influencée par les éléments de surface, les échantillons des variables aléatoires des signaux de réception étant tout d'abord multipliés (24) et les échantillons multipliés étant sommés sur une fenêtre temporelle glissante, et un signal étant déterminé, une valeur attendue

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

étant déterminée, la valeur attendue E{S} étant comparée à une valeur seuil, la présence ou non d'un signal commun (SC) dans les deux signaux de réception étant déterminée.

**2.** Procédé selon la revendication 1, **caractérisé en ce qu'**une conversion A/N (15, 16) des signaux de réception est mise en œuvre par une génération de fréquence d'échantillonnage commune (17).

**3.** Procédé selon la revendication 1 ou 2, **caractérisé en ce que** la longueur des impulsions d'émission est déterminée par multiplication à partir d'un nombre prédéterminé (N, 25) d'échantillons et d'une fréquence d'échantillonnage prédéfinie.

**4.** Procédé de fonctionnement d'un système radar destiné à éviter des tromperies par des tiers, une liaison étant prévue entre au moins un récepteur de goniométrie et un radar de recherche, plusieurs impulsions ayant des codes différents et/ou des formes de signal différentes étant émises par le radar de recherche (3), les récepteurs de goniométrie et/ou le radar de recherche recevant des impulsions (6) diffusées au niveau du missile (1), un contrôle étant effectué pour vérifier si ces impulsions de réception (6) sont diffusées au niveau d'une cible et forment ainsi un signal utile ou sont formées par des signaux de leurre, des directions de réception des impulsions de réception (6) étant déterminées au moyen de l'au moins un récepteur de goniométrie et/ou du radar de recherche, un contrôle étant effectué pour vérifier si les directions de réception peuvent être associées à une région cible commune et forment ainsi un signal utile ou ne sont pas associées à une région cible commune et forment ainsi un signal de leurre, le radar de recherche (3) et/ou les récepteurs de goniométrie étant respectivement équipés de deux antennes de réception pour la mise en œuvre supplémentaire du procédé selon la revendication 1.

**5.** Procédé selon la revendication 4, **caractérisé en ce que** l'antenne d'émission (8) fait partie du radar de recherche (3).

**6.** Procédé selon l'une des revendications 4 ou 5 précédentes, **caractérisé en ce que** la fréquence de répétition des impulsions (PRF) de l'antenne d'émission (9) est sélectionnée de façon que les récepteurs de goniométrie puissent toujours détecter de manière sûre une impulsion radar (6).

**7.** Procédé selon l'une des revendications 4 à 6 précédentes, **caractérisé en ce que** les codes sont générés de manière aléatoire.

**8.** Procédé selon l'une des revendications 4 à 7 précédentes, **caractérisé en ce que** tous les codes sont sélectionnés de manière différente à l'intérieur de M intervalles de répétition des impulsions, M étant supérieur ou égal à 2.

**9.** Procédé selon l'une des revendications 4 à 8 précédentes, **caractérisé en ce que** la forme de signal est sélectionnée de manière aléatoire et varie d'une impulsion d'émission à l'autre.

**10.** Procédé selon l'une des revendications 4 à 9 précédentes, **caractérisé en ce qu'**une fréquence porteuse constante est utilisée pour toutes les impulsions d'émission.

**11.** Procédé selon l'une des revendications 4 à 10 précédentes, **caractérisé en ce qu'**un contrôle est effectué pour vérifier si l'impulsion de réception a été reçue par le récepteur de goniométrie et/ou par le radar de recherche dans une fenêtre temporelle déterminée après l'émission de l'impulsion d'émission.

**12.** Procédé selon l'une des revendications 4 à 11 précédentes, **caractérisé en ce que** le temps de propagation d'un signal entre l'au moins un récepteur de goniométrie (21, 22, 23) et le radar de recherche (20) est déterminé, la fenêtre temporelle de réception de l'impulsion de réception étant calculée sur la base du temps de propagation et de la taille de la région à surveiller.

**13.** Procédé selon l'une des revendications 4 à 12 précédentes, **caractérisé en ce que** plusieurs récepteurs de goniométrie (21, 22, 23) sont utilisés.

**14.** Système radar destiné à mettre en œuvre le procédé selon l'une des revendications précédentes, comprenant une antenne d'émission (8) et deux antennes de réception (10a, 10b) et un circuit d'évaluation, des impulsions d'émission (4) pouvant être émises au moyen de l'antenne d'émission (8) et des signaux de réception pouvant être reçus au moyen des deux antennes de réception (10a, 10b), les deux antennes de réception étant placées à proximité l'une de l'autre et formant une antenne jumelée, les signaux de réception pouvant être évalués au moyen du circuit d'évaluation, les signaux de réception pouvant être échantillonnés et des échantillons n=1..N des signaux de réception pouvant être générés, A(n) représentant une variable aléatoire de la tension du signal de bruit de l'échantillon n, B(n) représentant une variable aléatoire de la tension du signal de bruit de l'échantillon n, C(n) représentant une variable aléatoire de l'impulsion radar (6), diffusée au niveau du missile, de l'échantillon n, les signaux de réception A(n)+C(n) ou B(n)+C(n) comprenant respectivement une composante de bruit A(n) ou B(n) et, dans le cas de la rétrodiffusion, respectivement une composante de signal supplémentaire C(n) influencée par les éléments de surface, les échantillons des variables aléatoires des signaux de réception pouvant tout d'abord être multipliés (24) et les échantillons multipliés pouvant être sommés dans une fenêtre temporelle glissante, et un signal $S = \sum_{n=1}^{N}[C(n) + A(n)] \cdot [C(n) + B(n)]$ pouvant être déterminé, une valeur attendue

$$E\{S\} = \sum_{n=1}^{N} E\{[C(n)]^2\} + E\{C(n) \cdot B(n)\} + E\{A(n) \cdot C(n)\} + E\{A(n) \cdot B(n)\}$$

pouvant être déterminée, la valeur attendue E{S} pouvant être comparée à une valeur seuil, un contrôle étant effectué pour déterminer si un signal commun (SC) est ou non présent dans les deux signaux de réception.

Figur 1

Figur 2

Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 10725164 B1
- US 2016178729 A1
- US 2015029052 A1

- DE 102016015107 B3